**Europäisches Patentamt**

**European Patent Office**

**Office européen des brevets**

(19)

(11) Veröffentlichungsnummer : **0 354 387 B1**

(12) # EUROPÄISCHE PATENTSCHRIFT

(45) Veröffentlichungstag der Patentschrift :
**11.11.92 Patentblatt 92/46**

(51) Int. Cl.$^5$ : **B62D 25/08, B60K 11/08**

(21) Anmeldenummer : **89113087.4**

(22) Anmeldetag : **17.07.89**

(54) **Frontquerträger.**

(30) Priorität : **06.08.88 DE 3826781**

(43) Veröffentlichungstag der Anmeldung :
**14.02.90 Patentblatt 90/07**

(45) Bekanntmachung des Hinweises auf die
Patenterteilung :
**11.11.92 Patentblatt 92/46**

(84) Benannte Vertragsstaaten :
**DE FR GB IT SE**

(56) Entgegenhaltungen :
**EP-A- 0 263 732**
**DE-C- 3 417 337**
**US-A- 3 295 627**
**US-A- 4 141 426**
**US-A- 4 428 447**

(73) Patentinhaber : **Adam Opel Aktiengesellschaft**
**Bahnhofsplatz 1 Postfach 17 10**
**W-6090 Rüsselsheim (DE)**

(72) Erfinder : **Georg, Gerhard, Ing.(grad.)**
**Kranichstrasse 26**
**W-6085 Nauheim (DE)**

(74) Vertreter : **Bergerin, Ralf, Dipl.-Ing. et al**
**Adam Opel AG, Bahnhofsplatz 1 Postfach 17**
**10**
**W-6090 Rüsselsheim (DE)**

EP 0 354 387 B1

Jouve, 18, rue Saint-Denis, 75001 PARIS

## Beschreibung

Die Erfindung bezieht sich auf einen Frontquerträger zum Verbinden von Seitenteilen eines Kraftfahrzeugs.

Die Frontpartie eines Kraftfahrzeuges hat in der Regel mehrere, die Seitenteile der Karosserie verbindende Querträger, um eine ausreichende Festigkeit sicherzustellen. Als Beispiel für den Stand der Technik sei auf die DE-C-34 17 337 verwiesen. Wenn im Kraftfahrzeug Zusatzgebläse untergebracht werden müssen, beispielsweise für eine Klimaanlage, dann ordnet man diese bislang hinter den Querträgern an und befestigt sie dort. Die Platzverhältnisse in heutigen Kraftfahrzeugen sind jedoch oftmals so ungünstig, daß die Anordnung zusätzlicher Gebläse Schwierigkeiten bereitet.

Der Erfindung liegt die Aufgabe zugrunde, einen Frontquerträger zum Verbinden von Seitenteilen eines Kraftfahrzeuges derart zu gestalten, daß der Einbau zumindest eines zusätzlichen Gebläses keine Platzschwierigkeiten bereitet.

Diese Aufgabe wird erfindungsgemäß dadurch gelöst, daß im Frontquerträger zumindest eine kreisförmige Öffnung zur Aufnahme eines Gebläses vorgesehen ist.

Durch diese Gestaltung wird der Querträger in die Lage versetzt, zusätzlich zu seiner Funktion als Aussteifungsbauteil der Fahrzeugkarosserie eine Aufnahme für das Gebläse zu bilden. Er muß hierzu im Bereich der Öffnung eine größere Höhe haben als allgemein üblich, was platzmäßig keine Schwierigkeiten bereitet, jedoch seine Festigkeit wesentlich erhöht. Dank der Erfindung kann in ein Kraftfahrzeug mit geringem Kostenaufwand und ohne Platzprobleme ein zusätzliches Gebläse angeordnet werden.

Grundsätzlich ist es möglich, das Gebläse an einem beliebigen Bauteil zu befestigen und nur in die Öffnung des Frontquerträgers ragen zu lassen.

Fertigungstechnisch besonders vorteilhaft ist es jedoch, wenn in der Öffnung ein Gebläsehalter mit Leitring angeordnet ist. Das Gebläse kann dann fallweise auf einfache Art in der Öffnung befestigt werden. Wird kein Gebläse benötigt, dann läßt man die Öffnung einfach frei. Somit kann für verschiedene Ausstattungsvarianten eines Kraftfahrzeuges der gleiche Frontquerträger verwendet werden. Auch ein nachträgliches Umrüsten ist leicht möglich.

Eine Anordnung von zwei Gebläsen im Frontquerträger ist möglich, wenn er brillenartig ausgebildet ist und nebeneinander zwei Öffnungen für die Aufnahme von zwei Gebläsen aufweist.

Eine besonders gute Aussteifung der Fahrzeugkarosserie läßt sich erreichen, wenn der Frontquerträger an seinen beiden Enden und zusätzlich oben und unten Anschlüsse zum Verbinden mit der Fahrzeugkarosserie hat.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in

Fig. 1 eine Vorderansicht des Frontquerträgers mit den im Kraftfahrzeug angrenzenden Bauteilen,

Fig. 2 einen Längsschnitt durch den vorderen Bereich eines Kraftfahrzeugs mit dem erfindungsgemäßen Frontquerträger.

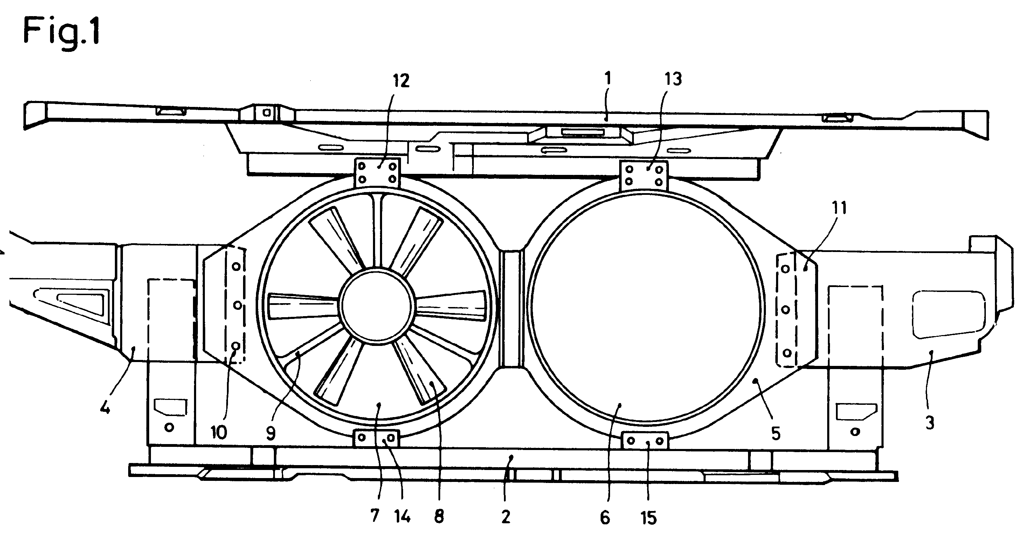

In der Figur 1 sind von der Frontpartie einer Fahrzeugkarosserie eine obere Quertraverse 1 und eine untere Quertraverse 2 dargestellt. Die untere Quertraverse 2 ist mit Seitenteilen 3, 4 verbunden, welche zur Aufnahme der Fahrzeugscheinwerfer dienen.

Wichtig für die Erfindung ist ein Frontquerträger 5, welcher brillenartig ausgebildet ist und nebeneinander zwei Öffnungen 6, 7 hat. In der in Figur 1 gesehen linken Öffnung 7 ist ein Gebläse 8 angeordnet, welches von einem Gebläsehalter 9 mit Leitring in der Öffnung 7 gehalten ist. Auch in der Öffnung 6 kann ein dem Gebläse 8 entsprechendes Gebläse angeordnet werden. Der Frontquerträger 5 hat an seinen beiden Enden jeweils einen Anschluß 10, 11, über den er mit den Seitenteilen 3, 4 verbunden ist. Nach oben und unten hin hat der Frontquerträger 5 weitere Anschlüsse 12, 13 und 14, 15, über die er mit der oberen Quertraverse 1 bzw. der unteren Quertraverse 2 verbunden ist.

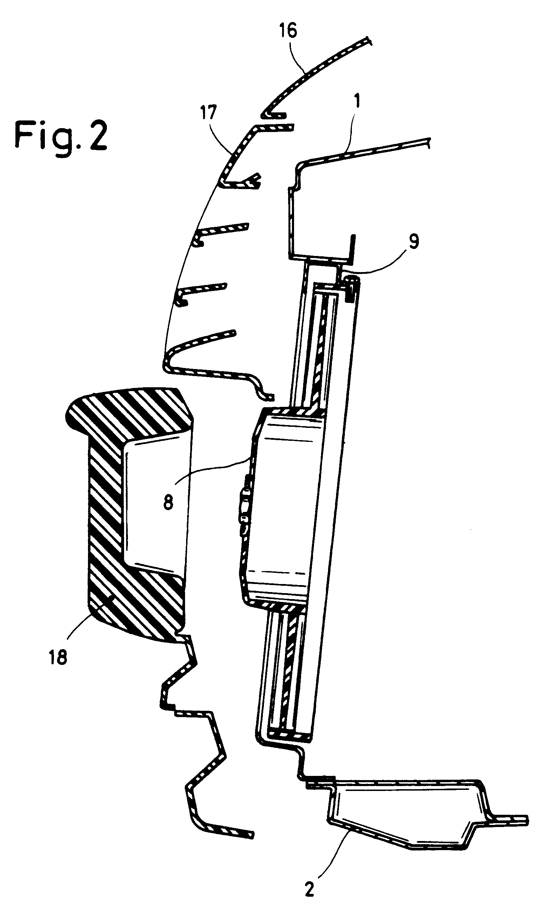

Die Schnittdarstellung gemäß Figur 2 zeigt wiederum die obere Quertraverse 1 und die untere Quertraverse 2. Weiterhin ist der Gebläsehalter 9 zu erkennen, der das Gebläse 8 haltert. Vor dieser Anordnung ist eine Motorhaube 16, ein Kühlergrill 17 und eine Stoßstange 18 dargestellt.

## Patentansprüche

1. Frontquerträger zum Verbinden von Seitenteilen eines Kraftfahrzeugs, dadurch gekennzeichnet, daß in ihm zumindest eine kreisförmige Öffnung (6, 7) zur Aufnahme eines Gebläses (8) vorgesehen ist.

2. Frontquerträger nach Anspruch 1, dadurch gekennzeichnet, daß in der Öffnung (6, 7) ein Gebläsehalter (9) mit Leitring angeordnet ist.

3. Frontquerträger nach den Ansprüchen 1 oder 2, dadurch gekennzeichnet, daß er brillenartig ausgebildet ist und nebeneinander zwei Öffnungen (6, 7) für die Aufnahme von zwei Gebläsen (8) aufweist.

4. Frontquerträger nach zumindest einem der vorangehenden Ansprüche, dadurch gekennzeichnet, daß er an seinen beiden Enden und zusätzlich oben und unten Anschlüsse (11 - 15) zum Verbinden mit der Fahrzeugkarosserie hat.

## Claims

1. Front cross member for connecting side parts of a motor vehicle, **characterised** in that the front cross member contains at least one circular opening (6, 7) for receiving a fan (8).

2. Front cross member according to claim 1, **characterised** in that the opening (6, 7) contains a fan holder (9) with a guide ring.

3. Front cross member according to the claims 1 or 2, **characterised** in that the front cross member is constructed in the shape of a pair of spectacles and has two openings (6, 7) side by side for receiving two fans (8).

4. Front cross member according to at least one of the aforementioned claims, **characterised** in that the front cross member has connectors (11 - 15) at its two ends and additionally at the top and bottom for connection to the body of the motor vehicle.

## Revendications

1. Traverse avant reliant des éléments latéraux d'un véhicule automobile, caractérisée par le fait qu'il est prévu dans celle-ci au moins une ouverture (6, 7) circulaire destinée à recevoir un ventilateur (8).

2. Traverse avant selon la revendication 1, caractérisée par le fait qu'un support de ventilateur (9) avec un anneau directeur est monté dans l'ouverture (6, 7).

3. Traverse avant selon la revendication 1 ou 2, caractérisée par le fait qu'elle est agencée à la manière de lunettes et comporte deux ouvertures (6, 7) disposées côte à côte qui sont destinées à recevoir deux ventilateurs (8).

4. Traverse avant selon l'une au moins des revendications précédentes, caractérisée par le fait qu'elle comporte à ses deux extrémités et, en outre, en haut et en bas des dispositifs de liaison (11 - 15) pour la liaison avec la carrosserie du véhicule.

Fig.1

EP 0 354 387 B1

# Fig.2